# EUROPÄISCHE PATENTSCHRIFT

(11) **EP 3 330 529 B1**
(45) Veröffentlichungstag und Bekanntmachung des Hinweises auf die Patenterteilung: **29.07.2020**
(21) Anmeldenummer: 16202278.4
(22) Anmeldetag: 05.12.2016
(51) Int. Cl.: F03D 1/06, F03D 80/30

(54) **GURTBAUGRUPPE FÜR EIN WINDENERGIEANLAGENROTORBLATT**
BELT ASSEMBLY FOR A WIND TURBINE ROTOR BLADE
SYSTÈME DE COURROIES POUR UNE PALE DE ROTOR D'ÉOLIENNE

(43) Veröffentlichungstag der Anmeldung: 06.06.2018
(73) Patentinhaber: Nordex Energy GmbH, 22419 Hamburg (DE)
(72) Erfinder: Lipka, Thomas, DE - 18055 Rostock (DE); Klein, Hendrik, DE - 18147 Rostock (DE); Kremer, Jochen, DE - 22299 Hamburg (DE)
(74) Vertreter: Hauck Patentanwaltspartnerschaft mbB

(56) Entgegenhaltungen:
- EP-A1- 2 930 010
- US-A1- 2014 301 859
- US-A1- 2016 146 185
- US-A1- 2016 221 272
- US-A1- 2016 333 850

## Beschreibung

Die Erfindung betrifft eine Gurtbaugruppe für ein Windenergieanlagenrotorblatt mit einem mit Kohlenstofffasern verstärkten Gurt, einem Blitzschutzleiter, der entlang des Gurtes verläuft, und einem Potentialausgleichselement, das den Gurt und den Blitzschutzleiter elektrisch leitend miteinander verbindet.

Die Verwendung von mit Kohlenstofffasern verstärkten Gurten in Windenergieanlagenrotorblättern stellt wegen der elektrischen Leitfähigkeit der Kohlenstofffasern besondere Anforderungen an den Blitzschutz. Insbesondere ist in der Regel ein Potentialausgleich zwischen derartigen Gurten und benachbart dazu verlaufenden, anderen elektrisch leitfähigen Strukturen wie etwa herkömmlichen Blitzschutzleitern erforderlich. Anderenfalls kann es zu Beschädigungen des Rotorblatts durch Überschläge zwischen den unterschiedlichen, elektrisch leitfähigen Strukturen kommen, die bei einem Blitzschlag insbesondere infolge elektromagnetischer Induktion auftreten können.

Vor diesem Hintergrund schlägt die Druckschrift EP 1 830 063 A1 vor, in einem Windenergieanlagenrotorblatt einen Kupferstreifen direkt auf ein Laminat aus Kohlenstofffasern aufzubringen.

Die Druckschrift EP 2 458 207 B1 beschreibt ein Windenergieanlagenrotorblatt mit einer Metallplatte, die in direkten Kontakt mit einem kohlenstofffaserhaltigen Laminat gebracht und über elektrische Leitungen mit einem Blitzschutzleiter verbunden wird.

Aus der Druckschrift EP 3 020 958 A1 ist ein Gurt für ein Windenergieanlagenrotorblatt bekannt geworden, dessen Laminat Schichten aus einem kohlenstofffaserhaltigen Material und Zwischenlagen aus einem anderen, elektrisch leitfähigen Material, insbesondere aus Metall, aufweist.

Aus der Druckschrift EP 2 930 010 A1 ist eine Gurtbaugruppe für ein Windenergieanlagenrotorblatt mit einem mit Kohlenstofffasern verstärkten Gurt, einem Blitzschutzleiter, der entlang dem Gurt verläuft, und einem Potentialausgleichselement, das den Gurt und den Blitzschutzleiter elektrisch leitend miteinander verbindet, bekannt geworden. Der Gurt besteht aus einem Laminat aus Kohlenstofffasern. Als Potentialausgleichselement wird ein Gewebe aus Kupferdrähten eingesetzt, das mit einem Blitzschutzleiter aus Kupfer verschweißt ist, und abschnittsweise auf dem Kohlenstofffaserlaminat aufliegt. Zusätzlich ist eine Deckschicht aus Kohlenstofffasern beschrieben.

Ebenfalls bekannt ist die Verwendung pultrudierter Halbzeuge zur Herstellung von Gurten für Windenergieanlagenrotorblätter. Die pultrudierten Halbzeuge zeichnen sich aufgrund ihrer Herstellung im Pultrusionsverfahren durch exakt in Längsrichtung ausgerichtete Verstärkungsfasern, beispielsweise Kohlenstofffasern, genau definierte Querschnitte und einen besonders hohen Faservolumengehalt aus. Unter Verwendung pultrudierter Halbzeuge können daher Gurte hergestellt werden, die insbesondere hinsichtlich ihrer Festigkeit herkömmlichen, im Laminierverfahren (beispielsweise mittels Vakuuminfusion) hergestellten Gurten überlegen sind.

Aus der Druckschrift WO 2012/123667 A2 ist ein Gurt für ein Windenergieanlagenrotorblatt bekannt geworden, der aus mehreren Schichten pultrudierter Halbzeuge aufgebaut ist.

Aus der Druckschrift WO 2015/070876 A1 ist bekannt geworden, pultrudierte Halbzeuge mit Längsschlitzen zu versehen, um die Ausdehnung von Lufteinschlüssen bei einer Verbindung mehrerer in Schichten übereinander liegender Halbzeuge im Vakuuminfusionsverfahren zu begrenzen.

Aus der Druckschrift WO 2015/058775 A1 sind pultrudierte Halbzeuge für Windenergieanlagenrotorblätter bekannt geworden, die mit einer besonderen Oberflächenschicht versehen sind, um bei einer Verbindung mehrerer in Schichten übereinander liegender pultrudierter Halbzeuge im Vakuuminfusionsverfahren eine gleichmäßige Verteilung des eingebrachten Harzes zu erzielen.

Aus der Druckschrift WO 2015/067279 A1 ist bekannt geworden, pultrudierte Halbzeuge für Windenergieanlagenrotorblätter in einem speziellen Verfahren in Längsabschnitte mit einer bestimmten Schäftung zu unterteilen.

Die Druckschrift US 2014/0301859 A1 zeigt ein Windenergieanlagenrotorblatt mit einem Gurt, der mehrere Schichten pultrudierter Halbzeuge aufweist, die in einem U-förmigen Kanal angeordnet sind. Der U-förmige Kanal enthält ein Material, das als Blitzschutzleiter dient.

Die Druckschrift US 2016/0333850 A1 beschreibt vorgefertigte Halbzeuge, die als "preform layer" bezeichnet werden. Sie weisen jeweils eine Vielzahl von kleinen Stäben auf, die auf Trägerschichten angeordnet sind. Diese Trägerschichten haben die Aufgabe, die kleinen Stäbe in einzelnen Lagen zu halten.

Die Druckschrift US 2016/0221272 A1 offenbart ein ähnliches Hybridmaterial wie die vorgenannte Druckschrift, wobei die Trägerschichten aus einem Kohlenstofffasermaterial bestehen. Eine elektrisch leitfähige Schicht soll eine elektrische Verbindung zwischen den Trägerschichten herstellen.

Davon ausgehend ist es die Aufgabe der Erfindung, eine Gurtbaugruppe für ein Windenergieanlagenrotorblatt zur Verfügung zu stellen, die optimale Festigkeitseigenschaften mit einem funktionierenden Blitzschutz verbindet.

Diese Aufgabe wird gelöst durch die Gurtbaugruppe mit den Merkmalen des Anspruchs 1. Vorteilhafte Ausgestaltungen sind in den sich anschließenden Unteransprüchen angegeben.

Die Gurtbaugruppe ist für ein Windenergieanlagenrotorblatt vorgesehen und hat
- einen mit Kohlenstofffasern verstärkten Gurt,
- einen Blitzschutzleiter, der entlang des Gurts verläuft, und
- ein Potentialausgleichselement, das den Gurt und den Blitzschutzleiter elektrisch leitend miteinander verbindet und das eine Lage aus einem Kohlenstofffasermaterial aufweist, die mit dem Blitzschutzleiter verbunden ist, wobei
- der Gurt mehrere, übereinander angeordnete Schichten pultrudierter Halbzeuge aufweist und
- die Lage zwischen zwei der Schichten pultrudierter Halbzeuge angeordnet ist.

Der Gurt bildet ein Element der Tragstruktur des Windenergieanlagenrotorblatts. Insbesondere kann es sich um einen Hauptgurt handeln, der einen Großteil der im Betrieb des Windenergieanlagenrotorblatts auftretenden Zugbelastungen aufnimmt. Der Gurt weist eine Vielzahl pultrudierter Halbzeuge auf, in denen Kohlenstofffasern verarbeitet sind. Sie sind im Pultrusionsverfahren hergestellt, sodass eine die Verstärkungsfasern umgebende Kunststoffmatrix ausgehärtet ist, wenn die pultrudierten Halbzeuge in der Gurtbaugruppe verarbeitet werden. Dabei können mehrere pultrudierte Halbzeuge gemeinsam derart miteinander verbunden werden, dass sie den Gurt bilden. Vorzugsweise werden sie hierzu in eine gemeinsame Kunststoffmatrix eingebettet, beispielsweise in einem Vakuuminfusionsverfahren. Der Querschnitt des Gurts kann dabei über die Länge des Gurts variieren, wobei hierfür die Anzahl der Schichten, also die Anzahl der übereinander angeordneten pultrudierten Halbzeuge und/oder die Anzahl der nebeneinander angeordneten pultrudierten Halbzeuge variiert werden kann.

Der Blitzschutzleiter verläuft entlang des Gurts. Er kann zum Beispiel im Wesentlichen parallel zu dem Gurt verlaufen, in einem Abstand von dem Gurt, unmittelbar an dem Gurt oder eng benachbart davon. Der Blitzschutzleiter kann sich im Wesentlichen über die gesamte Länge des Gurts und gegebenenfalls auch darüber hinaus erstrecken. Er weist eine Stromtragfähigkeit auf, die zur Ableitung eines Blitzstroms ausreichend ist. Hierzu kann er beispielsweise aus Kupfer bestehen und einen wirksamen Querschnitt von 25 mm² oder mehr aufweisen, insbesondere von etwa 50 mm². Der Blitzschutzleiter kann ein massiver metallischer Leiter sein oder eine Vielzahl von Einzeldrähten aufweisen, beispielsweise in Form eines Flechtschlauchs, z.B. aus Kupfer.

Das Potentialausgleichselement verbindet den Gurt und den Blitzschutzleiter elektrisch leitend miteinander. Die elektrische Leitfähigkeit der Verbindung muss nicht perfekt sein, es ist ausreichend, wenn die zwischen Blitzschutzleiter und Gurt bei einem Blitzschlag auftretenden Potentialunterschiede so weit reduziert werden, dass Beschädigungen der Gurtbaugruppe oder benachbarter Elemente des Windenergieanlagenrotorblatts verhindert werden, insbesondere infolge von Überschlägen zwischen Blitzschutzleiter und Gurt.

Die Erfinder haben erkannt, dass die im Zusammenhang mit Laminaten aus Kohlenstofffasern verwendeten Blitzschutzeinrichtungen herkömmlicher Rotorblätter für Gurte aus pultrudierten Halbzeugen nur bedingt geeignet sind. Grund hierfür ist, dass die pultrudierten Halbzeuge zum Zeitpunkt ihrer elektrischen Verbindung mit einem Potentialausgleichselement bereits ausgehärtet sind und eine Oberfläche aufweisen, die überwiegend von einem Matrixmaterial gebildet ist. Die enthaltenen Kohlenstofffasern sind dadurch nicht oder nur stark eingeschränkt kontaktierbar.

Bei der Erfindung gelingt eine ausreichende elektrische Kontaktierung des Gurtes dadurch, dass als Potentialausgleichselement eine Lage aus einem Kohlenstofffasermaterial verwendet wird, die zwischen zwei Schichten der pultrudierten Halbzeuge angeordnet wird. Versuche haben ergeben, dass auf diese Weise ein verbesserter elektrischer Kontakt zu dem Gurt hergestellt wird. Es wird angenommen, dass dies einerseits auf die Verdoppelung der Kontaktfläche zurückgeführt werden kann, da die Lage im Vergleich zu einem Aufliegen auf einer Seite eines Gurts an beiden Seiten flächig an Elementen des Gurts anliegt. Andererseits könnte zu dem verbesserten elektrischen Kontakt beitragen, dass die Lage bei der Montage zwischen den Schichten der starren, pultrudierten Halbzeuge stark komprimiert wird, beispielsweise aufgrund eines Vakuums, das bei einem Vakuuminfusionsverfahren hergestellt wird, wodurch die Kohlenstofffasern der Lage besonders wirksam an die pultrudierten Halbzeuge gepresst werden. Die elektrische Verbindung zwischen der Lage und dem Blitzschutzleiter kann insbesondere dadurch hergestellt werden, dass die Lage unmittelbar flächig an dem Blitzschutzleiter anliegt. Einbezogen ist auch eine mittelbare Verbindung, insbesondere über ein weiteres Element der Potentialausgleichseinrichtung, das seinerseits unmittelbar an dem Blitzschutzleiter anliegt, zum Beispiel eine weitere Lage eines Kohlenstofffasermaterials.

Die Lage des Kohlenstofffasermaterials kann mehrere Längsabschnitte aufweisen und/oder von einer einzigen Materiallage gebildet sein, deren Kohlenstofffasern sich zwischen den beiden Enden des Gurts bzw. einer angrenzenden Schicht erstrecken. Im Querschnitt betrachtet kann die Lage des Kohlenstofffasermaterials einen Abstand zwischen dem Blitzschutzleiter und dem Gurt überbrücken, insbesondere einen Abstand in Richtung einer Profilsehne, also in Breitenrichtung des Gurts, und/oder einen Abstand in Richtung einer Profilhöhe, also in Dickenrichtung des Gurts. Die Lage des Kohlenstofffasermaterials kann besonders einfach in die Gurtbaugruppe integriert werden, da sie aufgrund ihrer Materialeigenschaften gut mit den übrigen Elementen der Gurtbaugruppe verbunden werden kann. Die Lage dient dabei nicht zur Übertragung eines Blitzstroms, sondern zur Übertragung eines Potentialausgleichsstromes.

In einer Ausgestaltung weisen die beiden Schichten, zwischen denen die Lage angeordnet ist, eine Breite auf, wobei sich die Lage im Wesentlichen über diese gesamte Breite erstreckt. Dadurch wird eine besonders große Kontaktfläche hergestellt.

In einer Ausgestaltung weisen die beiden Schichten, zwischen denen die Lage angeordnet ist, jeweils mehrere nebeneinander angeordnete pultrudierte Halbzeuge auf, wobei eine Breite der Lage so bemessen ist, dass die Lage an allen pultrudierten Halbzeugen der beiden Schichten anliegt. Auf diese Weise wird ebenfalls eine besonders große Kontaktfläche ausgebildet. Zugleich wird sichergestellt, dass alle pultrudierten Halbzeuge der beiden Schichten kontaktiert werden.

In einer Ausgestaltung weist die Gurtbaugruppe eine Außenseite auf, die in einer Einbauposition der Gurtbaugruppe einer aerodynamischen Fläche eines Windenergieanlagenrotorblatts zugewandt ist, wobei der Blitzschutzleiter an die Außenseite angrenzt. Der Blitzschutzleiter ist dadurch von der Außenseite aus zugänglich, so dass weitere Elemente einer Blitzschutzeinrichtung, z.B. ein Blitzschutzrezeptor, einfach an den Blitzschutzleiter angeschlossen werden können. Dies ist auch bei einem fertigen Windenergieanlagenrotorblatt oder einer vorgefertigten Rotorblatthalbschale, in das oder in die die Gurtbaugruppe integriert ist, von außen möglich, insbesondere durch eine Deckschicht einer Rotorblattwandung hindurch.

In einer Ausgestaltung weist die Gurtbaugruppe einen Einleger mit einer parallel zu dem Gurt verlaufenden Aussparung auf, in der der Blitzschutzleiter angeordnet ist. Dies vereinfacht die Anordnung des Blitzschutzleiters in einer vorgegebenen Position.

In einer Ausgestaltung steht die Lage in Richtung von dem Gurt weg nicht über den Einleger über. Wahlweise kann die Lage in Richtung von dem Gurt weg über den Blitzschutzleiter überstehen, nicht jedoch über den Einleger hinaus. Dadurch wird vermieden, dass Abschnitte der Lage, insbesondere aus einzelnen Rovings bestehende "Fasernadeln", von der Anordnung abstehen und einen möglichen Ausgangspunkt für Überschläge bilden. Diese Gefahr besteht speziell am von dem Gurt abgewandten Ende des Einlegers, wo fertigungsbedingt Freiräume verbleiben können, in die eine "Fasernadel" hineinragen kann.

In einer Ausgestaltung ist die Lage in der Aussparung zwischen dem Einleger und dem Blitzschutzleiter angeordnet. Dies kann den elektrischen Kontakt zwischen dem Blitzschutzleiter und der Lage verbessern, da die Lage zwischen dem Blitzschutzleiter und dem Einleger komprimiert werden kann. Ein besonderer Vorteil besteht überdies darin, dass die Lage den Blitzschutzleiter nicht verdeckt, so dass der Blitzschutzleiter von einer Außenseite aus sichtbar bleiben kann. Dadurch kann eine nachträgliche Verbindung eines weiteren Elements einer Blitzschutzeinrichtung mit dem Blitzschutzleiter erheblich vereinfacht werden.

In einer Ausgestaltung weist die Aussparung und/oder der Blitzschutzleiter einen im Wesentlichen rechteckigen Querschnitt auf und die Lage liegt an mindestens zwei Seitenflächen des Blitzschutzleiters an. Insbesondere kann die Lage an drei Seitenflächen des Blitzschutzleiters anliegen. Dadurch wird ein besonders guter und großflächiger Kontakt zwischen Blitzschutzleiter und Lage erreicht.

In einer Ausgestaltung weist die Aussparung einen Abstand von dem Gurt auf. In diesem Fall kann die Aussparung insbesondere eine Rechtecknut sein. Grundsätzlich kann die Aussparung auch unmittelbar an den Gurt angrenzen, wodurch ein unmittelbarer elektrischer Kontakt zwischen Gurt und Blitzschutzleiter hergestellt werden kann, soweit der Blitzschutzleiter direkt an dem Gurt anliegt. Es hat sich jedoch gezeigt, dass ein solcher unmittelbarer Kontakt über die Länge des Gurts in der Regel nur abschnittsweise erzielt wird, was zu Längsabschnitten mit unterschiedlich gutem Kontakt führen kann. Bei einem Abstand zwischen Aussparung und Gurt wird gezielt verhindert, dass der Blitzschutzleiter den Gurt berührt, und es wird eine über die Länge des Gurts weitgehend gleichmäßige Verbindung erzielt.

In einer Ausgestaltung weist das Potentialausgleichselement eine weitere Lage eines Kohlenstofffasermaterials auf, die an mindestens einem der pultrudierten Halbzeuge anliegt und mit dem Blitzschutzleiter verbunden ist. Die Verbindung der weiteren Lage mit dem Blitzschutzleiter kann insbesondere dadurch hergestellt werden, dass die weitere Lage im Bereich des Blitzschutzleiters an der Lage anliegt. Ebenfalls möglich ist, dass die weitere Lage unmittelbar an dem Blitzschutzleiter anliegt, insbesondere flächig. Das mindestens eine der pultrudierten Halbzeuge, an dem die weitere Lage anliegt, gehört bevorzugt zu einer weiteren Schicht, steht also nicht in unmittelbarem Kontakt zu der Lage. In jedem Fall wird eine weitere Verbesserung des Potentialausgleichs erzielt.

In einer Ausgestaltung ist die weitere Lage eine Abdecklage, die auf der ins Innere des Rotorblatts weisenden Seite der Gurtbaugruppe und somit des Gurtes angeordnet ist. Sie liegt entsprechend an einer obersten Schicht der pultrudierten Halbzeuge an. Grundsätzlich kann auch die weitere Lage zwischen zwei Schichten pultrudierter Halbzeuge angeordnet sein. Es hat sich jedoch gezeigt, dass eine Abdecklage zur Vermeidung von Potentialunterschieden zwischen unterschiedlichen pultrudierten Halbzeugen besonders wirksam sein kann.

In einer Ausgestaltung sind die Kohlenstofffasern der Lage und/oder der weitere Lage biaxial angeordnet oder unidirektional in Längsrichtung des Gurts. Bei einer biaxialen Anordnung wird eine relativ hohe elektrische Leitfähigkeit in Querrichtung erreicht. Ein relativ geringes Flächengewicht im Bereich von 100 g/qm bis 400 g/qm ist dann für einen wirksamen Potentialausgleich ausreichend. Hierfür kann bei Verwendung von unidirektional in Längsrichtung des Gurts ausgerichteten Fasern ein höheres Flächengewicht erforderlich sein, beispielsweise im Bereich von 400 g/qm bis 1600 g/qm. Ein Vorteil ist jedoch, dass die unidirektionalen Fasern einen höheren Beitrag zur Zugfestigkeit des Gurts leisten können.

In einer Ausgestaltung weist die Lage und/oder die weitere Lage ein Gelege aus Kohlenstofffasern aufweist. Gelege, auf englisch bezeichnet als *non-crimp fabrics,* zeichnen sich durch weitgehend geradlinig angeordnete Fasern auf, im Gegensatz zu miteinander verschlungenen Fasern bei Geweben oder Geflechten. Für die Verwendung als Potentialausgleich ist dies von Vorteil, weil ein großflächigerer Kontakt hergestellt werden kann.

In einer Ausgestaltung sind die pultrudierten Halbzeuge, der Blitzschutzleiter und das Potentialausgleichselement in eine gemeinsame Kunststoffmatrix eingebettet und als vorgefertigte Baugruppe zur Integration in ein Windenergieanlagenrotorblatt nach dem Aushärten der Kunststoffmatrix ausgebildet. Das Einbetten kann insbesondere in einem Vakuuminfusionsverfahren erfolgen. Hierfür kann die Gurtbaugruppe in einer speziellen Herstellungsform vorgefertigt werden. Die Integration in ein Windenergieanlagenrotorblatt vereinfacht sich dadurch. Alternativ können die Elemente der Gurtbaugruppe gemeinsam mit weiteren Komponenten des Windenergieanlagenrotorblatts miteinander verbunden werden, etwa in einer Herstellungsform für eine Rotorblatthalbschale, in die die Elemente der Gurtbaugruppe und weitere Materialien für die übrigen Elemente der Halbschale eingelegt werden.

Die Erfindung richtet sich ebenfalls auf ein Windenergieanlagenrotorblatt mit einer Gurtbaugruppe in einer der vorstehend erläuterten Ausgestaltungen. Das Windenergieanlagenrotorblatt kann insbesondere eine druckseitige und eine saugseitige Rotorblatthalbschale aufweisen, in denen jeweils eine Gurtbaugruppe verarbeitet sein kann, und einen oder mehrere Stege, die zwischen den Gurtbaugruppen angeordnet sind. Der Blitzschutzleiter der Gurtbaugruppe bzw. die Blitzschutzleiter der beiden Gurtbaugruppen können jeweils mit einem oder mehreren Blitzrezeptoren des Windenergieanlagenrotorblatts verbunden sein.

Nachfolgend werden weitere Besonderheiten der Gurtbaugruppe erläutert, die jeweils mit einer oder mehreren der vorstehenden Ausgestaltungen kombiniert werden können.

Die Lage kann an einer Stirnfläche eines blattwurzelseitigen Endes eines der pultrudierten Halbzeuge und an einer Stirnfläche eines blattspitzenseitigen Endes eines der pultrudierten Halbzeuge anliegen. Dabei kann es sich um dasselbe pultrudierte Halbzeug handeln, das sich über die gesamte Länge zwischen den beiden genannten Enden erstreckt, oder um unterschiedliche pultrudierte Halbzeuge innerhalb einer Schicht. Dadurch kann der elektrische Kontakt zu den pultrudierten Halbzeugen verbessert werden.

Die Lage kann sich über die gesamte Länge des Gurts erstrecken. Das Potentialausgleichselement erfasst damit also den Gurt über seine gesamte Länge. Insbesondere kann dies dadurch erreicht werden, dass die blattspitzen- und blattwurzelseitigen Stirnflächen der längsten pultrudierten Halbzeuge, die sich über die gesamte Länge des Gurts erstrecken, an der Lage anliegen.

Die Lage kann flächig an den Schichten und/oder an dem Blitzableiter anliegen, insbesondere jeweils über die gesamte Länge des Gurts. Dadurch kommt es zu einem großflächigen Kontakt über die Längserstreckung des Gurts.

Eine der Stirnflächen kann schräg zur Längsrichtung des Gurts angeordnet sein, wobei ein Normalenvektor auf die Stirnfläche im Wesentlichen orthogonal zu einer Querrichtung des Gurts ausgerichtet ist und das Verhältnis aus einer Dicke des pultrudierten Halbzeugs, an dem die Stirnfläche ausgebildet ist, und der Erstreckung der Stirnfläche in Längsrichtung des Gurts im Bereich von 1:5 bis 1:50 liegt. Insbesondere kann das Verhältnis im Bereich von 1:10 bis 1:30 liegen, zum Beispiel bei etwa 1:20. Es versteht sich, dass auch beide bzw. sämtliche Stirnflächen, an denen die Lage anliegt, entsprechend schräg ausgebildet sein können. Durch die schräge Ausbildung der Stirnfläche wird die Kontaktfläche zwischen pultrudiertem Halbzeug und Potentialausgleichselement vergrößert, ohne den Gurt strukturell zu schwächen. Außerdem ist an den Kontaktflächen eine Kontaktierung der offenen Rovings möglich, wodurch der Übergangswiderstand zwischen der Kohlenstofffaserlage und den pultrudierten Halbzeugen verringert werden kann.

Das Potentialausgleichselement kann eine weitere Lage aus einem Kohlenstofffasermaterial aufweisen, die an der Lage und/oder an dem Blitzschutzleiter und an mindestens einer Stirnfläche eines weiteren pultrudierten Halbzeugs des Gurts anliegt. Dadurch wird die elektrische Kontaktierung der den Gurt bildenden pultrudierten Halbzeuge weiter verbessert.

Der Gurt kann eine Anzahl von übereinander angeordneten Schichten pultrudierter Halbzeuge aufweisen, wobei jede der Schichten eine blattwurzelseitige Stirnfläche und eine blattspitzenseitige Stirnfläche aufweist und die weitere Lage mindestens an der Hälfte der blattwurzelseitigen Stirnflächen und mindestens an der Hälfte der blattspitzenseitigen Stirnflächen anliegt. Auch durch diese Maßnahme wird der Potentialausgleich weiter verbessert.

Die weitere Lage kann zwischen zwei benachbarten Stirnflächen, an denen sie anliegt, flächig an einem pultrudierten Halbzeug anliegen. Dadurch kontaktiert auch die weitere Lage die angrenzenden pultrudierten Halbzeuge nicht nur im Bereich der Stirnflächen, sondern zusätzlich großflächig an einer oberen Fläche.

Die weitere Lage kann in zwei Längsabschnitte unterteilt sein, von denen einer an mindestens der Hälfte der blattwurzelseitigen Stirnflächen und der andere an mindestens der Hälfte der blattspitzenseitigen Stirnflächen anliegt. Die weitere Lage kann somit von zwei Längsabschnitten gebildet sein, zwischen denen eine Lücke verbleibt. Jeder der Längsabschnitte kann zusätzlich an der Lage anliegen, sodass insgesamt ein guter Potentialausgleich bei relativ geringem Materialeinsatz erzielt wird.

Die Stirnflächen einer obersten der Schichten können sich dadurch auszeichnen, dass sie nicht an dem Potentialausgleichselement anliegen. Mit der obersten Schicht ist diejenige Schicht gemeint, die beim Einlegen der Gurtbaugruppe in eine Herstellungsform für eine Rotorblatthalbschale am weitesten oben angeordnet ist, sich also im größten Abstand von einer aerodynamischen Fläche der betreffenden Halbschale befindet. Diese oberste Schicht weist in der Regel die geringste Länge auf und erstreckt sich im Wesentlichen in einem mittleren Längsabschnitt des Rotorblatts. Eine elektrische Kontaktierung dieser Stirnflächen ist für einen ausreichenden Potentialausgleich unter Umständen verzichtbar, sodass eine besonders kompakte Ausführung des Potentialausgleichselements möglich ist.

Nachfolgend wird die Erfindung anhand von in Figuren dargestellten Ausführungsbeispielen näher erläutert. Es zeigen:
- Fig. 1: eine erfindungsgemäße Gurtbaugruppe in schematischer Darstellung im Längsschnitt;
- Fig. 2: eine andere erfindungsgemäße Gurtbaugruppe, ebenfalls in schematischer Darstellung im Längsschnitt;
- Fig. 3a bis 3i: Elemente einer anderen, erfindungsgemäßen Gurtbaugruppe in Draufsichten beim Einlegen in eine Herstellungsform zu aufeinanderfolgenden Zeitpunkten;
- Fig. 4: die Gurtbaugruppe aus Fig. 2 in einer schematischen Ansicht im Querschnitt
- Fig. 5 bis 9: Varianten zu der Lösung aus Fig. 4 für die Anordnung der Lage und der weiteren Lage im Bereich des Blitzschutzleiters, in dem Detail Y aus Fig. 4 entsprechenden Ausschnittsdarstellungen.

Für alle Ausführungsbeispiele werden für sich entsprechende Elemente dieselben Bezugszeichen verwendet.

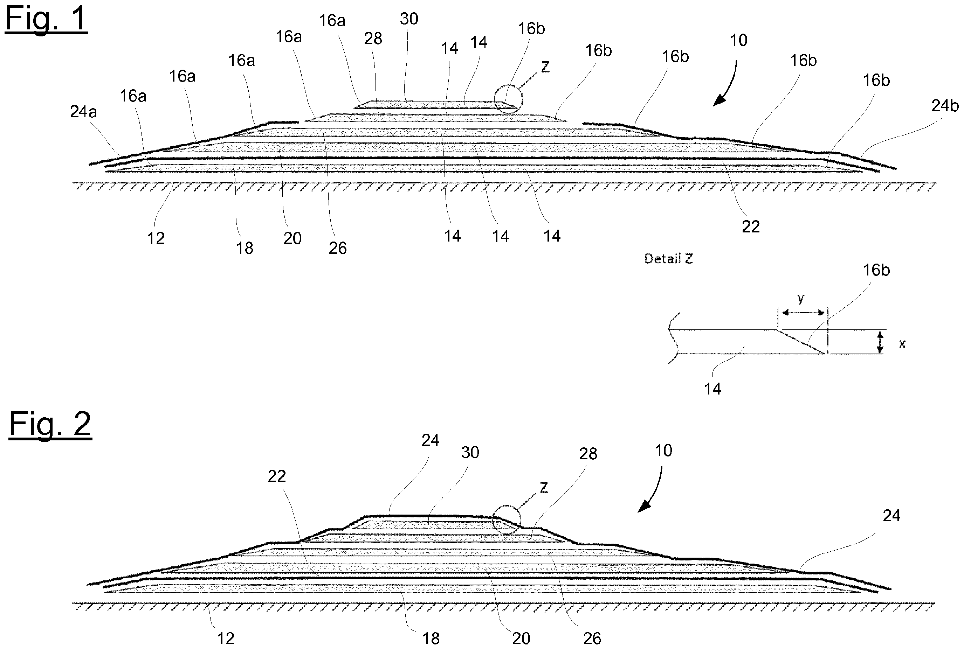

Die schematisch dargestellte Gurtbaugruppe 10 aus Fig. 1 ist auf einer Herstellungsform 12 angeordnet, auf der sämtliche Elemente der Gurtbaugruppe 10 in einem Vakuuminfusionsverfahren miteinander verbunden werden. In der Schnittebene der Figur 1 erkennt man beispielhaft fünf Schichten pultrudierter Halbzeuge 14, wobei jede Schicht aus mehreren, nebeneinander angeordneten Halbzeugen besteht. Die Halbzeuge erstrecken sich jeweils von einem in der Figur 1 links dargestellten, blattwurzelseitigen Ende bis zu einem in der Figur 1 rechts dargestellten, blattspitzenseitigen Ende. An den genannten Enden weisen alle Schichten jeweils eine schrägstehende Stirnfläche 16 auf, deren Normalenvektor im Wesentlichen senkrecht auf eine Querrichtung des Gurts, die sich in die Zeichenebene hinein erstreckt, angeordnet ist.

In dem hervorgehobenen Detail Z ist beispielhaft für eine der Stirnflächen 16 dargestellt, wie die Dicke x des pultrudierten Halbzeugs 14 ein Verhältnis zu der Erstreckung y der Stirnfläche 16 in Längsrichtung des Gurts bildet. Dieses Verhältnis beträgt im gezeigten Ausführungsbeispiel etwa 1:20, ist also wesentlich kleiner als in der nicht maßstabsgerechten Zeichnung dargestellt.

Zwischen der untersten Schicht 18 und der zweiten Schicht 20 der pultrudierten Halbzeuge 14 ist eine Lage 22 aus einem Kohlenstofffasermaterial angeordnet, die nachfolgend auch als erste Lage 22 bezeichnet wird. Sie erstreckt sich über die gesamte Länge des Gurts und liegt flächig an den pultrudierten Halbzeugen 14 der untersten Schicht 18 und den pultrudierten Halbzeugen 14 der zweiten Schicht 20 an. Außerdem liegt die erste Lage 22 flächig an den blattwurzelseitigen Stirnflächen 16a und blattspitzenseitigen Stirnflächen 16b der pultrudierten Halbzeuge 14 der untersten Schicht 18 an. Darüber hinaus ist die erste Lage 22 mit einem in der Figur 1 nicht dargestellten Blitzschutzleiter verbunden. Hierzu wird auf die weiteren Figuren verwiesen.

Die erste Lage 22 bildet einen Teil eines Potentialausgleichselements der Gurtbaugruppe 10. Einen anderen Bestandteil dieses Potentialausgleichselements bildet eine weitere Lage 24 aus einem Kohlenstofffasermaterial, die nachfolgend auch als zweite Lage 24 bezeichnet wird. Sie ist in einen blattwurzelseitigen Längsabschnitt 24a und in einen blattspitzenseitigen Längsabschnitt 24b unterteilt, zwischen denen sich eine Lücke befindet.

Der blattwurzelseitige Längsabschnitt 24a der zweiten Lage 24 liegt an den abgeschrägten blattwurzelseitigen Stirnflächen 16a der pultrudierten Halbzeuge 14 der zweiten Schicht 20 und der dritten Schicht 26 sowie im Bereich der blattwurzelseitigen Stirnfläche 16a der pultrudierten Halbzeuge 14 der untersten Schicht 18 an der ersten Lage 22 des Potentialausgleichselements an. Außerdem liegt der blattwurzelseitige Längsabschnitt 24a der zweiten Lage 24 flächig an einem Abschnitt der Oberseite des pultrudierten Halbzeugs 14 der dritten Schicht 26 an.

Der blattspitzenseitige Längsabschnitt 24b der zweiten Lage 24 liegt an den blattspitzenseitigen Stirnflächen 16b der pultrudierten Halbzeuge 14 der zweiten Schicht 20 und der dritten Schicht 26 an, sowie im Bereich der blattspitzenseitigen Stirnfläche 16b der pultrudierten Halbzeuge 14 der ersten Schicht 18 an der ersten Lage 22. Außerdem liegt dieser Längsabschnitt 24b der zweiten Lage 24 zwischen den Stirnflächen 16b der pultrudierten Halbzeuge 14 der zweiten Schicht 20 und der dritten Schicht 26 flächig an der Oberseite der pultrudierten Halbzeuge 14 der zweiten Schicht 20 an. Die beiden Längsabschnitte 24a, 24b der zweiten Lage 24 sind ebenfalls mit einem in der Figur 1 nicht dargestellten Blitzableiter verbunden, wie später noch erläutert wird.

Die pultrudierten Halbzeuge 14 einer vierten Schicht 28 und einer obersten Schicht 30 werden von den beiden Längsabschnitten 24a und 24b der zweiten Schicht 24 nicht abgedeckt und stehen somit nicht unmittelbar in Kontakt mit dem Potentialausgleichselement.

Das Ausführungsbeispiel der Figur 2 gleicht hinsichtlich der Schichten 18, 20, 26, 28, 30 und der ersten Lage 22 des Potentialausgleichselements dem Ausführungsbeispiel der Figur 1. Unterschiede bestehen in der Ausgestaltung der zweiten Lage 24 des Potentialausgleichselements. Diese ist im Ausführungsbeispiel der Figur 2 eine sich ebenfalls über die gesamte Länge des Gurts erstreckende Abdecklage, die an allen blattwurzelseitigen und blattspitzenseitigen Stirnflächen 16a, 16b der zweiten Schicht 20, der dritten Schicht 26, der vierten Schicht 28 und der obersten Schicht 30 anliegt sowie zusätzlich an den zwischen diesen Stirnflächen 16a, 16b angeordneten Oberseiten der jeweiligen pultrudierten Halbzeuge 14. Außerdem liegt die zweite Lage 24 im Bereich der blattwurzelseitigen und blattspitzenseitigen Stirnflächen 16a, 16b der untersten Schicht 18 flächig an den dort befindlichen Abschnitten der ersten Lage 22 an. Wie im Ausführungsbeispiel der Figur 1 auch, sind die erste Lage 22 und die zweite Lage 24 des Potentialausgleichselement elektrisch mit einem in der Figur 2 nicht dargestellten Blitzschutzleiter verbunden.

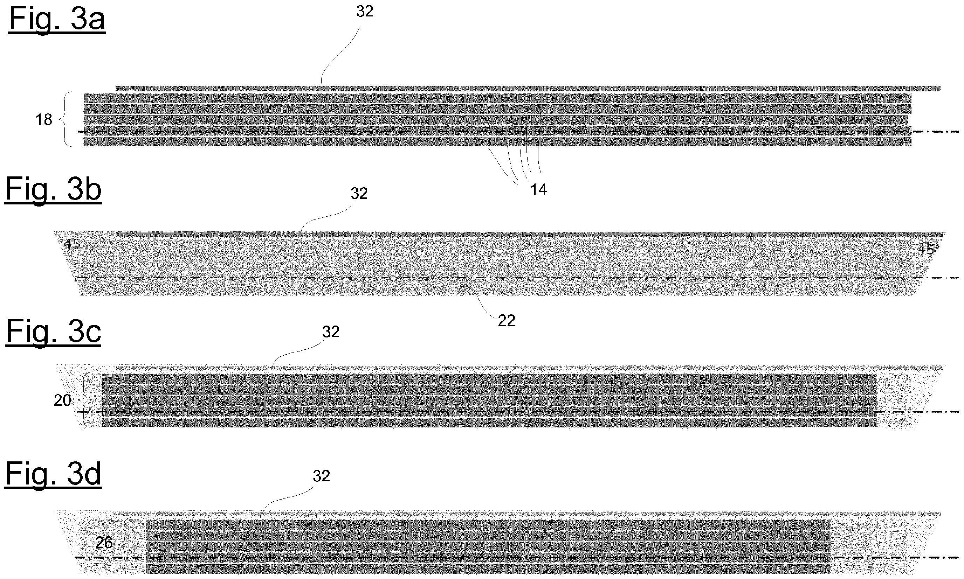

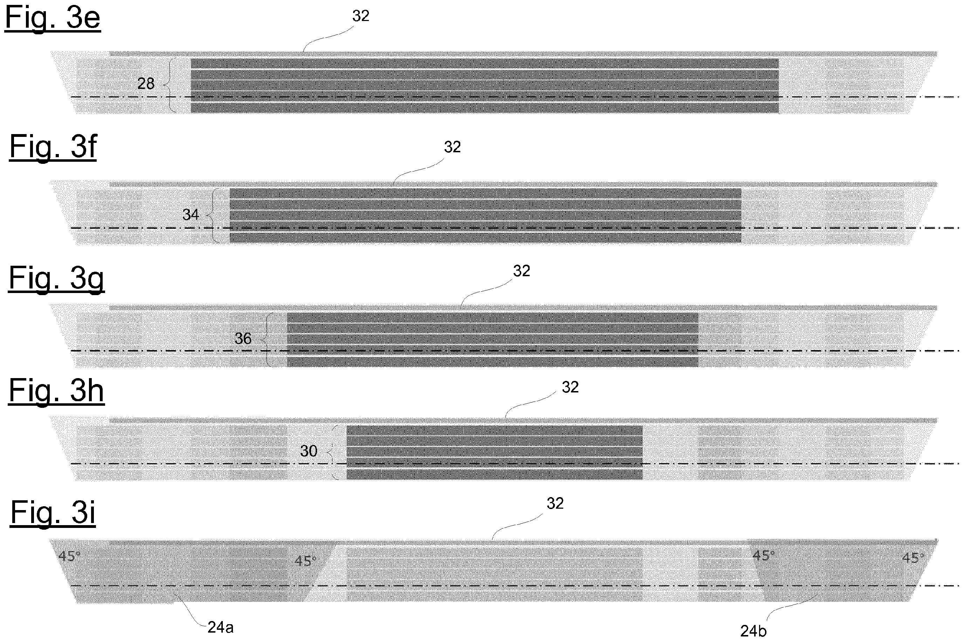

Der Aufbau eines der Figur 1 ähnelnden Ausführungsbeispiels einer Gurtbaugruppe wird anhand der Figuren 3a bis 3i näher erläutert, die jeweils Draufsichten zeigen. Ein blattwurzelseitiges Ende der gezeigten Elemente ist in allen Teilen der Figur 3 stets links dargestellt, ein blattspitzenseitiges Ende rechts.

Man erkennt in der Figur 3a eine unterste Schicht 18, die aus fünf nebeneinander angeordneten, pultrudierten Halbzeugen 14 besteht. Benachbart zu der untersten Schicht 18 verläuft ein Blitzschutzleiter 32, der sich nicht ganz bis an die Blattwurzel heran erstreckt, am blattspitzenseitigen Ende der pultrudierten Halbzeuge 14 der untersten Schicht 18 jedoch etwas in Richtung zur Blattspitze hin übersteht. Der Blitzschutzleiter 32 besteht im Beispiel aus Kupfer.

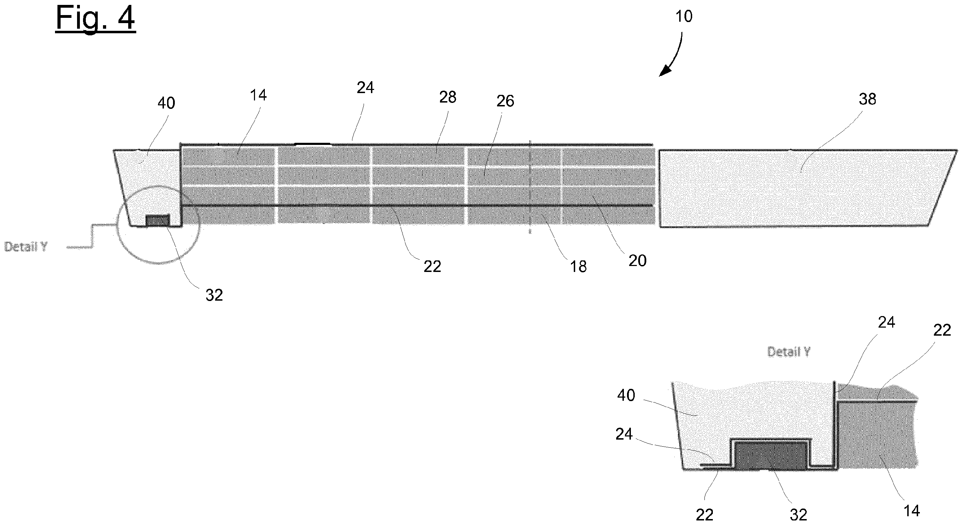

Figur 3b zeigt, dass in einem auf die Figur 3a folgenden Schritt eine erste Lage 22 eines Kohlenstofffasermaterials, im Beispiel bestehend aus einem biaxialen Gewebe, auf die Anordnung aus der Figur 3a aufgelegt wird. Diese erste Lage 22 erstreckt sich über die gesamte Länge der untersten Schicht 18 und steht am blattwurzelseitigen und am blattspitzenseitigen Ende, wo die erste Lage 22 in einem Winkel von etwa 45°, bevorzugt in einem Winkelbereich zwischen 40° und 60°, abgeschrägt ist, über die unterste Schicht 18 über. Die erste Lage 22 erstreckt sich über die gesamte Breite des Gurts bzw. über die gesamte Breite der aus den fünf nebeneinander angeordneten pultrudierten Halbzeugen 14 bestehenden untersten Schicht 18. Weiterhin erstreckt sich die erste Lage 22 an einer Seite über diese Breite hinaus und über den Blitzschutzleiter 32 hinweg, wo sie ebenfalls etwas übersteht. Einzelheiten hierzu werden später anhand der Figur 4 erläutert.

Fig. 3c zeigt, wie auf die Anordnung aus Fig. 3b eine zweite Schicht 20 aus ebenfalls fünf pultrudierten Halbzeugen 14 aufgelegt wird. Diese pultrudierten Halbzeuge 14 sind etwas kürzer als die pultrudierten Halbzeuge 14 der ersten Schicht 18.

Fig. 3d zeigt eine vierte Schicht 28, ebenfalls bestehend aus fünf nebeneinander angeordneten pultrudierten Halbzeugen 14, die auf die Anordnung aus der Figur 3c aufgelegt ist und nochmals etwas kürzer ausfällt als die zweite Schicht 20.

Die Figuren 3e bis 3h zeigen weitere Arbeitsschritte, in denen jeweils eine weitere Schicht, nämlich eine vierte Schicht 28, eine fünfte Schicht 34, eine sechste Schicht 36 und eine oberste Schicht 30, jeweils bestehend aus fünf nebeneinander angeordneten, pultrudierten Halbzeugen 14 mit von Schicht zu Schicht abnehmender Länge, aufgelegt wird.

Schließlich zeigt Figur 3i, wie die zweite Lage 24 eines Kohlenstofffasermaterials, die in zwei Längsabschnitte 24a, 24b unterteilt ist, aufgelegt wird. Die Längsabschnitte der zweiten Lage 24 sind so bemessen, dass sie jeweils einen Teil der Stirnflächen 16a, 16b der pultrudierten Halbzeuge 14 einiger der unteren Schichten erfassen. Andere Stirnflächen 16a, 16b, insbesondere die der pultrudierten Halbzeuge 14 der obersten Schicht 30, werden von der zweiten Lage 24 nicht erfasst.

Figur 4 zeigt einen Querschnitt durch eine Gurtbaugruppe 10 an einer Längsposition, an der der Gurt aus vier Schichten 18, 20, 26, 28 aus jeweils fünf nebeneinander angeordneten, pultrudierten Halbzeugen 14 aufgebaut ist. Im Querschnitt ist jedes der pultrudierten Halbzeuge 14 rechteckig und weist Abmessungen im Bereich von 1 mm bis 10 mm (Dicke) mal 40 mm bis 200 mm (Breite) auf.

In der Figur 4 an der rechten Seite, die zur Profilnasenkante weist, ist ein im Querschnitt viereckiger Einleger 38 aus einem Kernmaterial dargestellt. Ein weiterer Einleger 40 aus einem Kernmaterial befindet sich an der anderen Seite des Gurtes, die der Profilendkante zugewandt ist. Dieser Einleger 40 ist im Querschnitt ebenfalls viereckig, weist an seiner Unterseite, die einer Herstellungsform für die Gurtbaugruppe bzw. Rotorblatthalbschale zugewandt ist, jedoch eine im Querschnitt rechteckige Nut auf, in der der Blitzschutzleiter 32 angeordnet ist. Die rechteckige Nut ist eine Aussparung. Sie ist einer in der Fig. 4 nach unten weisenden Außenseite der Gurtbaugruppe 10 zugewandt.

Zwischen der untersten Schicht 18 und der zweiten Schicht 20 der pultrudierten Halbzeuge 14 ist die erste Lage 22 des Kohlenstofffasermaterials dargestellt. Sie endet in der Figur 4 rechts, zur Profilnasenkante hin, bündig mit den dort endenden, pultrudierten Halbzeugen 14 bzw. kurz davor, sodass sie nicht zum Einleger 38 hin übersteht. Die erste Lage 22 erstreckt sich über die gesamte Breite der ersten Schicht 18 und in der Figur 4 nach links, zur Profilendkante hin, darüber hinaus. Wie die unten rechts dargestellte Ausschnittsvergrößerung des Details Y zeigt, verläuft die erste Lage 22 dort zunächst zwischen dem gezeigten, endkantenseitigen pultrudierten Halbzeug 14 der untersten Schicht 18 und dem Einleger 40 nach unten und kleidet dann im weiteren Verlauf zur Profilendkante hin die im Einleger 40 ausgebildete Nut aus, sodass sie an drei Seiten des Blitzschutzleiters 32 flächig anliegt. Die erste Lage 22 ist zwischen dem Einleger 40 und dem Blitzschutzleiter 32 angeordnet. Im weiteren Verlauf steht die erste Lage 22 etwas über die profilendkantenseitige Fläche des Blitzschutzleiters 32 über und endet vor dem profilendkantenseitigen Ende des Einlegers 40.

Die zweite Lage 24 deckt die vierte Schicht 28 der pultrudierten Halbzeuge 14 über die gesamte Breite des Gurts ab, wobei sie zur Profilnasenkante hin ebenfalls nicht übersteht. Weiter in Richtung zur Profilendkante hin verläuft sie zunächst zwischen den endkantenseitigen, pultrudierten Halbzeugen 14 der vierten Schicht 28, der dritten Schicht 26 und der zweiten Schicht 28 einerseits und dem Einleger 40 andererseits nach unten, dann weiter zwischen dem Einleger 40 und der ersten Lage 22. Sie liegt somit im Bereich der Nut an der ersten Lage 22 an, sodass über die erste Lage 22 ein elektrischer Kontakt zum Blitzschutzleiter 32 hergestellt wird.

Wird die Gurtbaugruppe 10 der Figur 4 in ein Windenergieanlagenrotorblatt integriert, kann sie in eine Herstellungsform für das Windenergieanlagenrotorblatt (insbesondere in eine Herstellungsform für eine Rotorblatthalbschale) eingelegt werden, und zwar auf eine zuvor eingelegte Schicht aus Verstärkungsfasern, insbesondere Glasfasern, die eine aerodynamische Außenhaut bilden. Nach dem Einbetten der Verstärkungsfasern und der Gurtbaugruppe sowie gegebenenfalls weiterer Elemente des Windenergieanlagenrotorblatts bzw. der Rotorblatthalbschale in eine Kunststoffmatrix, zum Beispiel in einem Vakuuminfusionsverfahren, ist der Blitzschutzleiter 32 dann durch die Schicht mit den Verstärkungsfasern hindurch von außen sichtbar.

Die gesamte Anordnung der Figur 4 kann, insbesondere im Vakuuminfusionsverfahren in einer hierfür vorgesehenen Herstellungsform, in eine Kunststoffmatrix eingebettet werden, sodass sich eine vorgefertigte Gurtbaugruppe 10 ergibt, die später in ein Windenergieanlagenrotorblatt integriert werden kann.

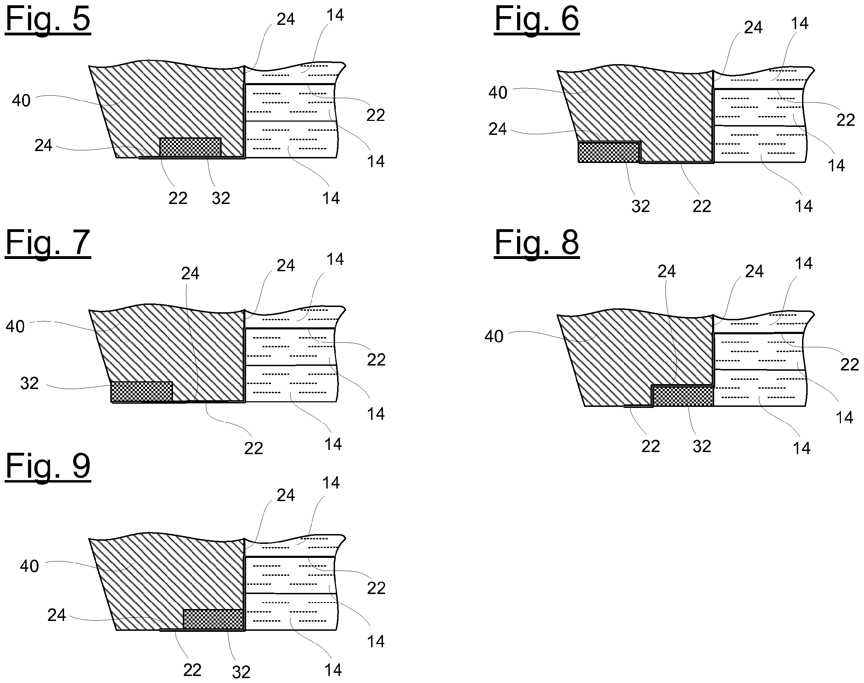

In der Variante der Fig. 5 ist die Form des Einlegers 40 unverändert und der Einleger 40 weist eine Aussparung für den Blitzschutzleiter 32 in Form einer Rechtecknut auf. Die erste Lage 22, die in den Fig. 5 bis 9 zwischen einer zweiten und dritten Schicht pultrudierter Profile angeordnet ist, und die zweite Lage 24 sind jedoch nicht wie in Fig. 4 zwischen Einleger 40 und Blitzschutzleiter 32 angeordnet, sondern verlaufen geradlinig an der Außenseite des Einlegers 40 und des Blitzschutzleiters 32 entlang. Dadurch wird der Blitzschutzleiter 32 verdeckt und ist unter Umständen nicht mehr von außen sichtbar. Die erste Lage 22 und die zweite Lage 24 liegen flächig an der Außenseite des Blitzschutzleiters 32 an, so dass ebenfalls ein ausreichender elektrischer Kontakt zum Blitzschutzleiter 32 hergestellt wird.

In der Variante der Fig. 6 weist der Einleger 40 eine Aussparung an einer von dem Gurt entfernten Ecke seines Querschnitts auf, in der der Blitzschutzleiter 32 angeordnet ist. Die erste Lage 22 und die zweite Lage 24 sind zwischen dem Einleger 40 und dem Blitzschutzleiter 32 angeordnet und kleiden die Aussparung aus. Sie liegen somit an zwei seitlichen Flächen des Blitzschutzleiters 32 an.

Fig. 7 zeigt eine Variante, die sich nur in der Anordnung der ersten Lage 22 und der zweiten Lage 24 von der Variante der Fig. 6 unterscheidet. Die erste Lage 22 und die zweite Lage 24 verlaufen an der Außenseite des Einlegers 40 und des Blitzschutzleiters 32 entlang.

In der Variante der Fig. 8 hat der Einleger 40 eine Aussparung an einer dem Gurt zugewandten Ecke seines Querschnitts, in der der Blitzschutzleiter 32 angeordnet ist. Darum grenzt der Blitzschutzleiter 32 mit einer seiner seitlichen Flächen unmittelbar an den Gurt an. Die erste Lage 22 und die zweite Lage 24 sind zwischen dem Einleger 40 und dem Blitzschutzleiter 32 angeordnet und kleiden die Aussparung aus, so dass sie an zwei seitlichen Flächen an dem Blitzschutzleiter 32 anliegen.

Fig. 9 zeigt eine Variante, die sich nur in der Anordnung der ersten Lage 22 und der zweiten Lage 24 von der Variante der Fig. 8 unterscheidet. Die erste Lage 22 und die zweite Lage 24 verlaufen zunächst zwischen Gurt und Blitzschutzleiter 32, dann an der Außenseite des Blitzschutzleiters 32 und des Einlegers 40 entlang.

### Liste der verwendeten Bezugszeichen

- 10: Gurtbaugruppe
- 12: Herstellungsform
- 14: pultrudiertes Halbzeug
- 16: Stirnfläche
- 16a: blattwurzelseitige Stirnfläche
- 16b: blattspitzenseitige Stirnfläche
- 18: unterste Schicht
- 20: zweite Schicht
- 22: Lage (erste Lage)
- 24: weitere Lage (zweite Lage)
- 24a: blattwurzelseitiger Längsabschnitt der zweiten Lage
- 24b: blattspitzenseitiger Längsabschnitt der zweiten Lage
- 26: dritte Schicht
- 28: vierte Schicht
- 30: oberste Schicht
- 32: Blitzschutzleiter
- 34: fünfte Schicht
- 36: sechste Schicht
- 38: profilnasenkantenseitiger Einleger
- 40: profilendkantenseitiger Einleger

## Patentansprüche

1. Gurtbaugruppe (10) für ein Windenergieanlagenrotorblatt mit
• einem mit Kohlenstofffasern verstärkten Gurt,
• einem Blitzschutzleiter (32), der entlang des Gurts verläuft, und
• einem Potentialausgleichselement, das den Gurt und den Blitzschutzleiter (32) elektrisch leitend miteinander verbindet und das eine Lage (22, 24) aus einem Kohlenstofffasermaterial aufweist, die mit dem Blitzschutzleiter verbunden ist, **dadurch gekennzeichnet, dass**
• der Gurt mehrere, übereinander angeordnete Schichten pultrudierter Halbzeuge (14) aufweist und
• die Lage (22, 24) zwischen zwei der Schichten pultrudierter Halbzeuge (14) angeordnet ist.

2. Gurtbaugruppe (10) nach Anspruch 1, **dadurch gekennzeichnet, dass** die beiden Schichten, zwischen denen die Lage (22) angeordnet ist, eine Breite aufweisen, wobei sich die Lage (22) im Wesentlichen über diese gesamte Breite erstreckt.

3. Gurtbaugruppe (10) nach Anspruch 1 oder 2, **dadurch gekennzeichnet, dass** die beiden Schichten, zwischen denen die Lage (22) angeordnet ist, jeweils mehrere nebeneinander angeordnete pultrudierte Halbzeuge (14) aufweisen, wobei eine Breite der Lage (22) so bemessen ist, dass die Lage (22) an allen pultrudierten Halbzeugen (14) der beiden Schichten anliegt.

4. Gurtbaugruppe (10) nach einem der Ansprüche 1 bis 3, **dadurch gekennzeichnet, dass** die Gurtbaugruppe (10) eine Außenseite aufweist, die in einer Einbauposition der Gurtbaugruppe (10) einer aerodynamischen Fläche eines Windenergieanlagenrotorblatts zugewandt ist, wobei der Blitzschutzleiter (32) an die Außenseite angrenzt.

5. Gurtbaugruppe (10) nach einem der Ansprüche 1 bis 4, **dadurch gekennzeichnet, dass** die Gurtbaugruppe (10) einen Einleger (40) mit einer parallel zu dem Gurt verlaufenden Aussparung aufweist, in der der Blitzschutzleiter (32) angeordnet ist.

6. Gurtbaugruppe (10) nach Anspruch 5, **dadurch gekennzeichnet, dass** die Lage (22) in Richtung von dem Gurt weg nicht über den Einleger (40) übersteht.

7. Gurtbaugruppe (10) nach Anspruch 5 oder 6, **dadurch gekennzeichnet, dass** die Lage (22) in der Aussparung zwischen dem Einleger (40) und dem Blitzschutzleiter (32) angeordnet ist.

8. Gurtbaugruppe (10) nach einem der Ansprüche 5 bis 7, **dadurch gekennzeichnet, dass** die Aussparung und/oder der Blitzschutzleiter (32) einen im Wesentlichen rechteckigen Querschnitt aufweist und die Lage (22) an mindestens zwei Seitenflächen des Blitzschutzleiters (32) anliegt.

9. Gurtbaugruppe (10) nach einem der Ansprüche 5 bis 8, **dadurch gekennzeichnet, dass** die Aussparung einen Abstand von dem Gurt aufweist.

10. Gurtbaugruppe (10) nach einem der Ansprüche 1 bis 9, **dadurch gekennzeichnet, dass** das Potentialausgleichselement eine weitere Lage (24) eines Kohlenstofffasermaterials aufweist, die an mindestens einem der pultrudierten Halbzeuge (14)anliegt und mit dem Blitzschutzleiter (32) verbunden ist.

11. Gurtbaugruppe (10) nach Anspruch 10, **dadurch gekennzeichnet, dass** die Gurtbaugruppe (10) eine Innenseite aufweist, die in einer Einbauposition der Gurtbaugruppe (10) einer aerodynamischen Fläche eines Windenergieanlagenrotorblatts abgewandt ist und die weitere Lage (24) eine auf der Innenseite der Gurtbaugruppe auf dem Gurt angeordnete Abdecklage ist.

12. Gurtbaugruppe (10) nach einem der Ansprüche 1 bis 11, **dadurch gekennzeichnet, dass** Kohlenstofffasern der Lage (22) und/oder der weiteren Lage (24) biaxial angeordnet sind oder unidirektional in Längsrichtung des Gurts.

13. Gurtbaugruppe (10) nach einem der Ansprüche 1 bis 12, **dadurch gekennzeichnet, dass** die Lage (22) und/oder die weitere Lage (24) ein Gelege aus Kohlenstofffasern aufweist.

14. Gurtbaugruppe (10) für ein Windenergieanlagenrotorblatt nach einem der Ansprüche 1 bis 13, **dadurch gekennzeichnet, dass** die pultrudierten Halbzeuge (14), der Blitzschutzleiter (32) und das Potentialausgleichselement in eine gemeinsame Kunststoffmatrix eingebettet und als vorgefertigte Baugruppe zur Integration in ein Windenergieanlagenrotorblatt nach dem Aushärten der Kunststoffmatrix ausgebildet sind.

15. Windenergieanlagenrotorblatt mit einer Gurtbaugruppe (10) nach einem der Ansprüche 1 bis 14.

## Claims

1. A spar cap assembly (10) for a wind turbine rotor blade, having:
• a spar cap reinforced with carbon fibers,
• a lightning conductor (32) that runs along the spar cap, and
• a potential equalization element that connects the spar cap and the lightning conductor (32) to each other in an electrically conductive manner and that has a sheet (22, 24) of a carbon fiber material which is connected to the lightning conductor, **characterized in that**:
• the spar cap has a plurality of layers of pultruded semifinished products (14) arranged on each other, and
• the sheet (22, 24) is arranged between two of the layers of pultruded semifinished products (14).

2. The spar cap assembly (10) according to claim 1, **characterized in that** the two layers between which the sheet (22) is arranged have a width, wherein the sheet (22) extends substantially over this entire width.

3. The spar cap assembly (10) according to claim 1 or 2, **characterized in that** the two layers between which the sheet (22) is arranged each have a plurality of pultruded semifinished products (14) arranged next to each other, wherein a width of the sheet (22) is dimensioned such that the sheet (22) lies against all pultruded semifinished products (14) of the two layers.

4. The spar cap assembly (10) according to one of claims 1 to 3, **characterized in that** the spar cap assembly (10) has an outer side that faces an aerodynamic surface of a wind turbine rotor blade when the spar cap assembly (10) is in an installed position, wherein the lightning conductor (32) adjoins the outer side.

5. The spar cap assembly (10) according to one of claims 1 to 4, **characterized in that** the spar cap assembly (10) has an insert (40) with a cutout running parallel to the spar cap in which the lightning conductor (32) is arranged.

6. The spar cap assembly (10) according to claim 5, **characterized in that** the sheet (22) does not project beyond the insert (40) in the direction away from the spar cap.

7. The spar cap assembly (10) according to claim 5 or 6, **characterized in that** the sheet (22) is arranged in the cutout between the insert (40) and the lighting conductor (32).

8. The spar cap assembly (10) according to one of claims 5 to 7, **characterized in that** the cutout and/or the lightning conductor (32) has a substantially rectangular cross-section, and the sheet (22) lies against at least two side surfaces of the lightning conductor (32).

9. The spar cap assembly (10) according to one of claims 5 to 8, **characterized in that** the cutout is at a distance from the spar cap.

10. The spar cap assembly (10) according to one of claims 1 to 9, **characterized in that** the potential equalization element has another sheet (24) of a carbon fiber material that adjoins at least one of the pultruded semifinished products (14) and is connected to the lightning conductor (32).

11. The spar cap assembly (10) according to claim 10, **characterized in that** the spar cap assembly (10) has an inner side aid that faces away from an aerodynamic surface of a wind turbine rotor blade when the spar cap assembly (10) is in an installed position, and the other sheet (24) is a cover layer arranged on the spar cap on the inner side of the spar cap assembly.

12. The spar cap assembly (10) according to one of claims 1 to 11, **characterized in that** the carbon fibers of the sheet (22) and/or the other sheet (24) are arranged biaxially or unidirectional in the longitudinal direction of the spar cap.

13. The spar cap assembly (10) according to one of claims 1 to 12, **characterized in that** the sheet (22) and/or the other sheet (24) have a lay-up of carbon fibers.

14. The spar cap assembly (10) for a wind turbine rotor blade according to one of claims 1 to 13, **characterized in that** the pultruded semifinished product (14), the lightning conductor (32) and the potential equalization element are embedded in a common plastics matrix and are designed as a prefabricated assembly for integration in a wind turbine rotor blade after curing the plastics matrix.

15. A wind turbine rotor blade with a spar cap assembly (10) according to one of claims 1 to 14.

## Revendications

1. Système de courroies (10) pour une pale de rotor d'éolienne, comprenant
• une courroie renforcée par des fibres de carbone,
• un paratonnerre (32) s'étendant le long de la courroie, et
• un élément de compensation de potentiel reliant la courroie et le paratonnerre (32) de façon électriquement conductrice et présentant une strate (22, 24) d'un matériau à base de fibres de carbone, laquelle est reliée au paratonnerre, **caractérisé en ce que**
• la courroie présente plusieurs couches de produits semifinis pultrudés (14) superposées, et
• la strate (22, 24) est disposée entre deux des couches de produits semifinis pultrudés (14).

2. Système de courroies (10) selon la revendication 1, **caractérisé en ce que** les deux couches entre lesquelles est disposée la strate (22) présentent une largeur, la strate (22) s'étendant essentiellement sur toute la largeur.

3. Système de courroies (10) selon la revendication 1 ou 2, **caractérisé en ce que** les deux couches entre lesquelles est disposée la strate (22) présentent respectivement plusieurs produits semifinis pultrudés (14) disposés côte à côte, une largeur de la strate (22) étant dimensionnée de telle façon que la strate (22) s'applique sur tous les produits semifinis pultrudés (14) des deux couches.

4. Système de courroies (10) selon l'une des revendications 1 à 3, **caractérisé en ce que** le système de courroies (10) présente un côté extérieur tourné vers une surface aérodynamique d'une pale de rotor d'éolienne dans une position de montage du système de courroies (10), le paratonnerre (32) étant adjacent au côté extérieur.

5. Système de courroies (10) selon l'une des revendications 1 à 4, **caractérisé en ce que** le système de courroies (10) présente un insert (40) avec un évidement s'étendant parallèlement à la courroie, dans lequel est disposé le paratonnerre (32).

6. Système de courroies (10) selon la revendication 5, **caractérisé en ce que** la strate (22) ne fait pas saillie au-delà de l'insert (40) dans la direction opposée à la courroie.

7. Système de courroies (10) selon la revendication 5 ou 6, **caractérisé en ce que** la strate (22) est disposée entre l'insert (40) et le paratonnerre (32) dans l'évidement.

8. Système de courroies (10) selon l'une des revendications 5 à 7, **caractérisé en ce que** l'évidement et/ou le paratonnerre (32) présente une section transversale essentiellement rectangulaire et la strate (22) s'applique sur au moins deux surfaces latérales du paratonnerre (32).

9. Système de courroies (10) selon l'une des revendications 5 à 8, **caractérisé en ce que** l'évidement présente un espacement par rapport à la courroie.

10. Système de courroies (10) selon l'une des revendications 1 à 9, **caractérisé en ce que** l'élément de compensation de potentiel présente une autre strate (24) d'un matériau à base de fibres de carbone, laquelle s'applique sur l'un des produits semifinis pultrudés (14) tout en étant reliée au paratonnerre (32).

11. Système de courroies (10) selon la revendication 10, **caractérisé en ce que** le système de courroies (10) présente un côté intérieur opposé à une surface aérodynamique d'une pale de rotor d'éolienne dans une position de montage du système de courroies (10) et l'autre couche (24) est une couche de revêtement disposée sur la courroie sur le côté intérieur du système de courroies.

12. Système de courroies (10) selon l'une des revendications 1 à 11, **caractérisé en ce que** des fibres de carbone de la strate (22) et/ou de l'autre strate (24) sont disposées de façon biaxiale ou unidirectionnelle dans le sens longitudinal de la courroie.

13. Système de courroies (10) selon l'une des revendications 1 à 12, **caractérisé en ce que** la strate (22) et/ou l'autre strate (24) présente/présentent un treillis en fibres de carbone.

14. Système de courroies (10) pour une pale de rotor d'éolienne selon l'une des revendications 1 à 13, **caractérisé en ce que** les produits semifinis pultrudés (14), le paratonnerre (32) et l'élément de compensation de potentiel sont enrobés dans une matrice en plastique commune et conçus comme un système préfabriqué destiné à être intégré dans une pale de rotor d'éolienne après le durcissement de la matrice en plastique.

15. Pale de rotor d'éolienne comprenant un système de courroies (10) selon l'une des revendications 1 à 14.
